# EUROPÄISCHE PATENTANMELDUNG

(11) **EP 3 093 089 A1**
(43) Veröffentlichungstag der Anmeldung: **16.11.2016**
(21) Anmeldenummer: 15001408.2
(22) Anmeldetag: 09.05.2015
(51) Int. Cl.: B23B 51/02, B23C 5/10

(54) **ROTATIONSWERKZEUG**

(71) Anmelder: Ledermann GmbH & Co. KG, 72160 Horb (DE)
(72) Erfinder: Dressler, Martin Dr., 73614 Schorndorf (DE); Grotzke, Holger, 72160 Horb-Rexingen (DE)
(74) Vertreter: Zurhorst, Stefan

(57) **Zusammenfassung**

Die Erfindung betrifft ein Rotationswerkzeug (1) zur spanabhebenden Bearbeitung von Werkstücken (2), welches sich entlang einer Längsachse (3) erstreckt, und welches mindestens eine Schneide (4) mit einer Spanfläche (5) und mindestens eine Spannut (6) umfasst. Das Rotationswerkzeug (1) ist in Richtung seiner Längsachse (3) in einen Zerspanungsteil (7) und in einen Spanabfuhrteil (8) aufgeteilt, wobei die mindestens eine Schneide (4) im Zerspanungsteil (7) angeordnet ist, und wobei die Spannut (6) im Spanabfuhrteil (8) ausgebildet ist. Die Spanfläche (5) der Schneide (4) liegt in einem Spanwinkel (γ₁) zur Längsachse (3), wobei die Spannut (6) in einem Nutwinkel (γ₂) zur Längsachse (3) verläuft, und wobei der Nutwinkel (γ₂) größer ist als der Spanwinkel (γ₁).

## Beschreibung

Die Erfindung betrifft ein Rotationswerkzeug nach dem Oberbegriff des Anspruchs 1.

Bei der spanabhebenden Bearbeitung von Werkstücken entstehen Späne, die möglichst unmittelbar vom Entstehungsort abtransportiert werden müssen. Zu diesem Zweck sind Spanräume und insbesondere gewendelte Spannuten vorgesehen. Die zum Einsatz kommenden Schneiden sind in ihrer geometrischen Ausgestaltung an das zu zerspanende Material angepasst, was insbesondere auch die Festlegung des Spanwinkels der jeweiligen Schneide betrifft. Bei herkömmlichen Rotationswerkzeugen nach dem Stand der Technik folgen die Spiralwinkel der Spanräume bzw. Spannuten in den Werkzeugen dem festgelegten Spanwinkel der Bohrschneide oder den Spanwinkeln der Frässchneiden. Mit anderen Worten gibt der festgelegte Spanwinkel auch den Neigungswinkel des sich daran anschließenden Spanraumes bzw. der zugeordneten Spannut vor. Die Spanräume bzw. Spannuten werden in diesen Winkeln konstant über die gesamte Werkzeuglänge fortgesetzt. Für jede Schneide wird jeweils ein Spanraum vorgesehen, der die an dieser Schneide entstehenden Späne abführen soll.

Beim Bohren und insbesondere beim tiefen Einfräsen in einen Werkstoff ist es aber problematisch, die bei der Bearbeitung erzeugten Späne vollständig mittels der genannten Spanräume bzw. Spannuten fort zu transportieren. Je tiefer die erzeugte Kontur oder Bohrung ist, desto eher neigen Werkzeuge zum Verstopfen der herkömmlichen Spanräume und Spannuten, wobei dann die Spanabfuhr unterbleibt. Sofern trotzdem weiter gebohrt oder gefräst wird, so wird oft das Werkstück durch die im Spanraum reibenden Späne beschädigt. Im Extremfall nimmt sogar das Werkzeug z.B. durch Überhitzung Schaden oder wird sogar zerstört.

Eine möglicherweise eingetretene Verstopfung des Spanraumes in Werkzeugen wird üblicherweise durch einen sogenannten Entspanzyklus beseitigt, in dem das Werkzeug aus dem Bauteil zurückgezogen wird. Verlässt das Werkzeug das Bauteil beim Rückzug, so können die Späne im Spanraum durch die Werkzeugrotation diesen tangential verlassen und werden entleert. Das Werkzeug mit freien Spanräumen taucht nun wieder in das Bauteil ein und setzt die Bearbeitung fort.

Unabhängig vom tatsächlichen Eintritt einer Spanverstopfung werden die Entspanzyklen bei den verstopfungsgefährdeten Werkzeugen im Rahmen einer automatisierten Fertigung vorbeugend vorgesehen. Dabei richtet sich die Anzahl der notwendigen Entspanzyklen nach der Erfahrung, wie kritisch die entsprechende Bearbeitung für ein Verstopfen des Werkzeugs ist.

Ein Nachteil des Einsatzes solcher Entspanzyklen besteht im Zeitaufwand und den damit verbundenen Produktionskosten. Sofern zu wenige Entspanzyklen durchgeführt werden und eine Verstopfung des Werkzeuges eintritt, kann die Verstopfungen dann so gravierend ausfallen, dass sich die festgebackenen Späne nicht mehr alleine durch die Werkzeugrotation lösen lassen. Das Werkzeug muss dann manuell gereinigt werden, was zu ungewollten Produktionsunterbrechungen mit entsprechenden Zusatzkosten führt.

Der Erfindung liegt die Aufgabe zugrunde, ein gattungsgemäßes Rotationswerkzeug derart weiterzubilden, dass die Spanabfuhr signifikant verbessert ist und Produktionsunterbrechungen minimiert sind.

Diese Aufgabe wird durch ein Rotationswerkzeug mit den Merkmalen des Anspruchs 1 gelöst.

Nach der Erfindung ist vorgesehen, dass das Rotationswerkzeug in Richtung seiner Längsachse in einen Zerspanungsteil und in einen Spanabfuhrteil aufgeteilt ist, wobei die mindestens eine Schneide im Zerspanungsteil angeordnet ist, wobei die Spannut im Spanabfuhrteil ausgebildet ist. Die Spanfläche der Schneide liegt in einem Spanwinkel zur Längsachse. Die Spannut verläuft in einem Nutwinkel zur Längsachse. Der Nutwinkel ist größer als der Spanwinkel und weist insbesondere einen Betrag von ≥ +45° auf. Abweichend vom Stand der Technik wird also davon Abstand genommen, dass der Spanwinkel der Schneide den Neigungswinkel bzw. den Nutwinkel entsprechender Spannuten vorgibt. Der Spanwinkel kann ohne Rücksicht auf die Spanabfuhr allein hinsichtlich eines optimalen Zerspanungsergebnisses festgelegt werden, wobei im Regelfall ein vergleichsweise kleiner Spanwinkel zum Einsatz kommt. Völlig unabhängig davon wird ein abweichender, nämlich größerer Nutwinkel gewählt, was die Spanabfuhr begünstigt. Die Neigung zur Verstopfung wird verringert oder sogar beseitigt. Die Häufigkeit von Entspanzyklen kann reduziert werden, wobei unter Umständen auf sie auch ganz verzichtet werden kann. Produktivität und Prozesssicherheit sind verbessert.

In einer bevorzugten Ausführungsform ist die Spanfläche bezogen auf die Längsachse gleichsinnig zur Spannut geneigt. Durch die Gleichsinnigkeit ergänzen sich der unmittelbare Spanflächenbereich und die davon entfernte Spannut hinsichtlich ihrer Abtransport-Wirkung für die entstehenden Späne.

Alternativ kann es zweckmäßig sein, dass die Spanfläche bezogen auf die Längsachse gegensinnig zur Spannut geneigt ist. Beim Eintauchen des Werkzeuges in das Werkstück entsteht eine in das Werkstück hinein weisende Richtungskomponente der Schnittkraft, die Aussplittern der Oberfläche, ein Abheben einer evtl. vorhandenen Beschichtung oder dgl. vermeidet. Dennoch sorgt die hinsichtlich des großen Nutwinkels optimierte Spannut für einen zuverlässigen Abtransport der entstehenden Späne. Falls das Werkstück beim Bohren oder Fräsen durchstoßen wird, kann ein Spanabtransport sogar in beide Axialrichtungen, also gleichzeitig zum Einspannende und zum freien Ende des Werkzeuges hin erfolgen.

In vorteilhafter Weiterbildung der Erfindung ist die über den Umfang des Spanabfuhrteiles verteilte Anzahl von Spannuten größer als die über den Umfang des Zerspanungsteiles verteilte Anzahl der Schneiden. Bevorzugt sind im Spanabfuhrteil mindestens drei und insbesondere vier bis acht Spannuten über den Umfang verteilt angeordnet. Hierdurch wird erreicht, dass einerseits für eine ausreichende Spanabfuhrkapazität eine geeignete Gesamtquerschnittsfläche aller Spannuten zur Verfügung steht, während andererseits ein Schaftkern mit größtmöglichem Kerndurchmesser und damit größtmöglicher Tragfähigkeit verbleibt. Bei festgelegtem Kerndurchmesser zur Erzielung einer geforderten Tragfähigkeit kann die Spanabfuhrkapazität signifikant erhöht werden. Umgekehrt ist es möglich, bei einem bestimmten geforderten Gesamtquerschnitt der Spannuten einen vergrößerten Kerndurchmesser zu erhalten. Gerade bei langen, tief eindringenden und schlanken Werkzeugen ergibt sich ein immenser Vorteil zur Vermeidung von Bruch insbesondere unter Biegebelastung.

In einer bevorzugten Ausführungsform ist zwischen dem Zerspanungsteil und dem Spanabfuhrteil ein Übergangsteil ohne Spannut angeordnet. Hierdurch kann die Überführung der Späne aus dem Zerspanungsteil in den Spanabfuhrteil insbesondere dann begünstigt werden, wenn die Anzahl der Zähne von der Anzahl der Spannuten abweicht.

Das erfindungsgemäße Rotationswerkzeug kann ein reiner Bohrer sein. Bevorzug ist mindestens eine Schneide als Umfangsfrässchneide ausgebildet, so dass ein Fräswerkzeug oder eine kombiniertes Bohr- und Fräswerkzeug gebildet ist. Die Spanräume der Frässchneiden werden während ihres drehenden Umlaufes radial nach außen nicht bzw. nicht vollständig durch eine Bohrungswand oder Werkstückwand abgedeckt, sondern sind vielmehr radial nach außen im Wesentlichen offen. In der Folge bildet sich ein Transportmechanismus für die entstandenen Späne aus, der nicht mit dem Transportmechanismus beim Bohren vergleichbar ist. Dennoch hat sich überraschend gezeigt, dass die erfindungsgemäße Ausgestaltung des Nutwinkels gerade beim Fräsen eine besonders hohe Abtransport-Wirkung entfaltet.

Ausführungsbeispiele der Erfindung sind nachfolgend anhand der Zeichnung näher erläutert. Es zeigen:
- Fig. 1: in einer Seitenansicht einen Schaftfräser nach dem Stand der Technik mit in Längsrichtung durchgehenden, in einem konstanten Spannutwinkel zur Längsachse angeordneten Spannuten,
- Fig. 2: in einer Seitenansicht ein erstes erfindungsgemäßes Ausführungsbeispiel eines Schaftfräsers mit zwei in unterschiedlichen Spannutwinkeln zur Längsachse angeordneten Spannutabschnitten, wobei der zweite Spannutwinkel größer ist als der erste Spannutwinkel,
- Fig. 3: in einer vergrößerten Detailansicht eine Variante des erfindungsgemäßen Rotationswerkzeuges nach Fig. 2 mit Bohrschneiden und mit einem 0° betragenden ersten Spannutwinkel,
- Fig. 4: in einer vergrößerten Detailansicht eine weitere Variante des erfindungsgemäßen Rotationswerkzeuges nach den Fig. 2 oder 3, wobei die ersten Spannutabschnitte gegenläufig zu den zweiten Spannutabschnitten geneigt sind,
- Fig. 5: in einer schematischen Querschnittsdarstellung den Schaftfräser nach dem Stand der Technik gemäß Fig. 1 mit Einzelheiten zur Ausgestaltung seiner drei Spannuten,
- Fig. 6: in einer schematischen Querschnittsdarstellung den erfindungsgemäßen Schaftfräser nach Fig. 2 mit Einzelheiten zur Ausgestaltung seiner acht über den Umfang des Spannutabschnittes verteilten Spannuten,
- Fig. 7: in einer Schemadarstellung die auf die Späne beim Bohren wirkenden Kraftverhältnisse, und
- Fig. 8: in einer Schemadarstellung die auf die Späne beim Fräsen wirkenden Kraftverhältnisse.

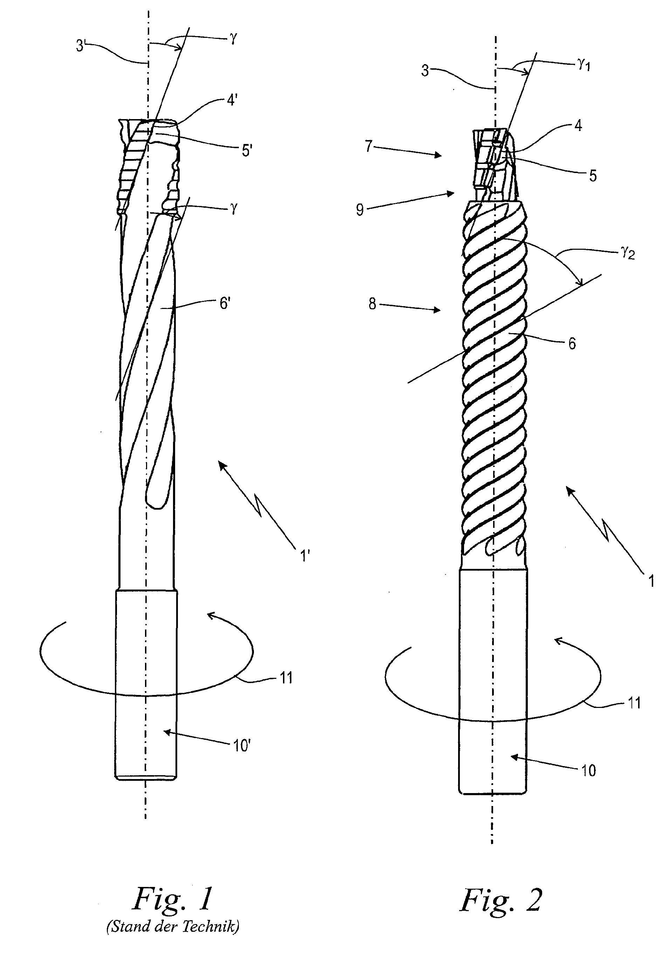

Fig. 1 zeigt in einer Seitenansicht ein Rotationswerkzeug 1' nach dem Stand der Technik am Beispiel eines Schaftfräsers, hier eines sogenannten Schlosskastenfräsers. Das Rotationswerkzeug 1' erstreckt sich entlang einer Längsachse 3', die im Betrieb auch die Drehachse bildet. Das Rotationswerkzeug 1' weist einen Spannschaft 10' auf, mittels dessen es in die nicht dargestellte Werkzeugaufnahme einer Antriebsspindel eingespannt wird. Hierüber erfolgt dann im Betrieb ein drehender Antrieb entsprechend einem Pfeil 11, der die Arbeitsdrehrichtung angibt.

An seinem dem Spannschaft 10' gegenüberliegenden freien Ende ist das Rotationswerkzeug 1' mit mindestens einer, hier drei über den Umfang verteilten Schneiden 4' versehen, welche jeweils in der Arbeitsdrehrichtung 11 nach vorne weisende Spanflächen 5' mit davor liegenden Spanräumen aufweisen. Die Spanflächen 5' verlaufen spiralig um die Längsachse 3' und liegen dabei in einem Spanwinkel γ zur Längsachse 3'. Des Weiteren begrenzen die Spanflächen 5' die genannten Spanräume, die hier als Spannuten 6' ausgebildet sind und dem spiraligen Verlauf der Spanflächen 5' verfolgen. Die Spannuten sind dabei über ihre gesamte Länge im gleichen und konstanten Spanwinkel γ zur Längsachse 3' geneigt wie die Spanflächen 5'.

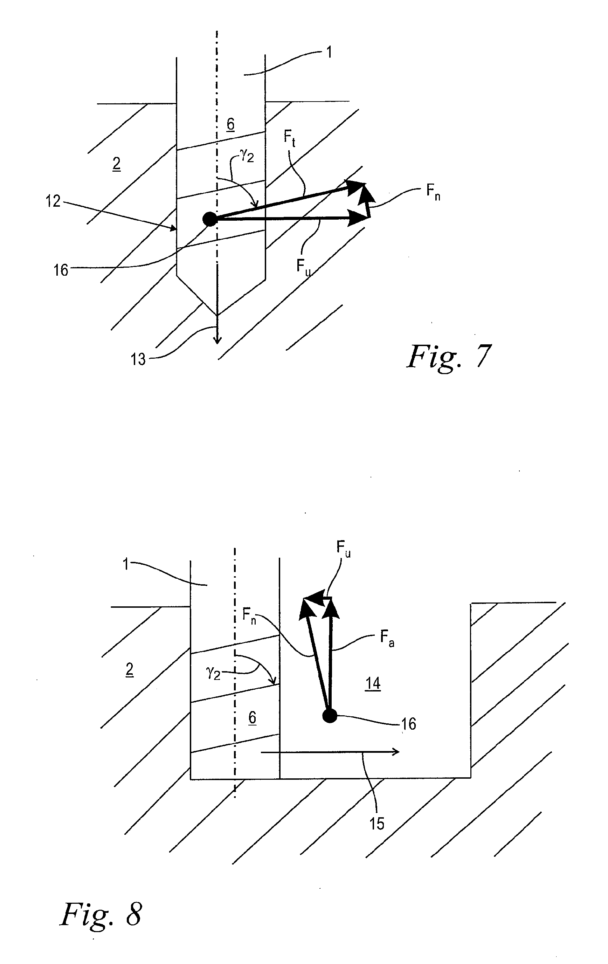

Fig. 2 zeigt in einer Seitenansicht ein erstes erfindungsgemäßes Ausführungsbeispiel eines Rotationswerkzeuges 1, welches ebenfalls als Schaftfräser, hier beispielhaft als sogenannter Schlosskastenfräser ausgeführt ist. Analog zum vorstehend beschriebenen Stand der Technik weist das erfindungsgemäße Rotationswerkzeuges 1 eine Längsachse 3, mindestens eine, hier beispielhaft zwei über den Umfang verteilte Schneiden 4 mit je einer Spanfläche 5, mindestens eine, hier mehrere über den Umfang verteilte Spannuten 6 und einen Spannschaft 10 auf. Auch das erfindungsgemäße Rotationswerkzeuges 1 ist für einen drehenden Antrieb um seine Längsachse 3 in der Arbeitsdrehrichtung 11 und für eine spanabhebende Bearbeitung von in den Fig. 7, 8 dargestellten Werkstücken 2 ausgelegt.

Abweichend vom Stand der Technik nach Fig. 1 ist das erfindungsgemäße Rotationswerkzeug 1 in einen Zerspanungsteil 7, welcher sich in Richtung der Längsachse 3 gegenüberliegend zum Spannschaft 10 im Bereich des freien Endes befindet, und in einen zwischen dem Zerspanungsteil 7 und dem Spannschaft 10 liegenden Spanabfuhrteil 8 gemäß der nachfolgenden Beschreibung aufgeteilt: Die mindestens eine Schneide 4 ist im Zerspanungsteil 7 angeordnet, während die Spannut 6 im Spanabfuhrteil 8 ausgebildet ist. Die Spanfläche 5 der Schneide 4 liegt in einem Spanwinkel γ₁ zur Längsachse 3, während die Spannut 6 in einem Nutwinkel γ₂ zur Längsachse 3 verläuft. Der Spanwinkel γ₁ wird ausgehend von der Richtung der Längsachse 3 gegen die Spanfläche 5 mit einem Betrag des Winkels von < 90° gemessen. Analog dazu wird auch der Nutwinkel γ₂ ausgehend von der Richtung der Längsachse 3 gegen die Spanfläche 5 mit einem Betrag des Winkels von < 90° gemessen. Als Vorzeichenregel gilt, dass der Nutwinkel γ₂ unabhängig von seiner Ausrichtung in Bezug auf die Arbeitsdrehrichtung 11 immer ein positives Vorzeichen aufweist. Im gezeigten Ausführungsbeispiel ist die vorlaufende Begrenzungsfläche der Spannuten 6 zum Spannschaft 10 hin geneigt, was beim Betrieb in der Arbeitsdrehrichtung 11 zu einem Spantransport in Richtung des Spannschaftes 10 führt. Bei bestimmten Fräsaufgaben kann aber auch eine umgekehrte Neigung der Spannuten zweckmäßig sein, bei der die vorlaufende Begrenzungsfläche der Spannuten 6 zum freien Ende bzw. zu den Schneiden 4 hin geneigt ist, was dann beim Betrieb in der Arbeitsdrehrichtung 11 zu einem Spantransport vom Spannschaft 10 fort führt. In beiden Fällen weist aber gemäß obiger Definition der Nutwinkel γ₂ ein positives Vorzeichen auf. Der Nutwinkel γ₂ ist bevorzugt ≥ +45° und insbesondere ≥ +55°. Beispielhaft ist hier der Nutwinkel γ₂ etwa +70°, während der Spanwinkel γ₁ etwa +20° ist. Jedenfalls gilt gemäß der Erfindung, dass der Nutwinkel γ₂ größer ist als der Spanwinkel γ₁.

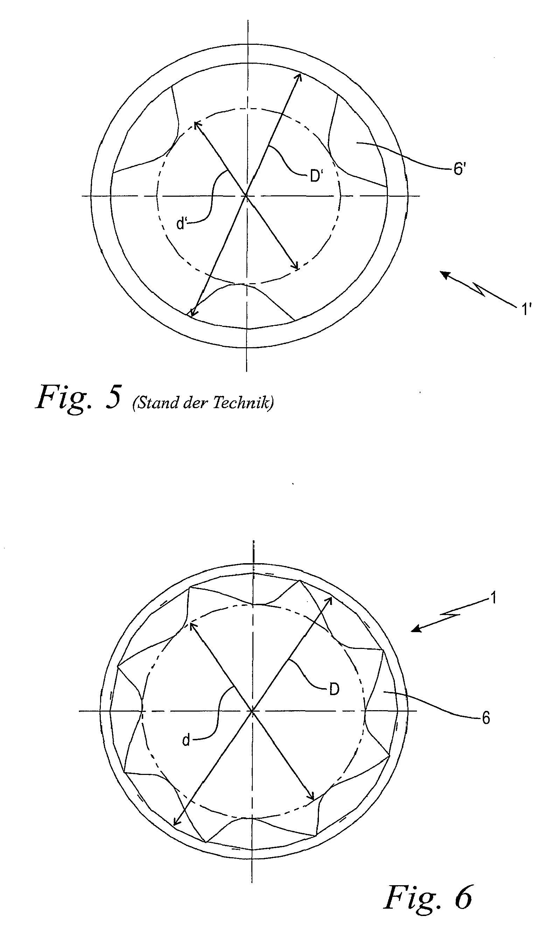

Es kann zweckmäßig sein, dass die Spanräume vor den Spanflächen 5 unmittelbar und ohne Unterbrechung in die sich daran anschließenden Spannuten 6 übergehen. Im gezeigten bevorzugten Ausführungsbeispiel ist jedoch zwischen dem Zerspanungsteil 7 und dem Spanabfuhrteil 8 ein Übergangsteil 9 mit reduziertem Durchmesser und ohne Spannut angeordnet. Dies kann eine Übergabe der Späne vom Zerspanungsteil 7 zum Spanabfuhrteil 8 begünstigen. Weiter ergibt sich noch aus Fig. 2, dass der Nutwinkel γ₂ für alle Spannuten 6 Erfindung ist aber auch ein variierender Nutwinkel γ₂ möglich, der beispielsweise stufenweise oder sogar kontinuierlich bzw. stetig vom Zerspanungsteil 7 zum Spannschaft 10 hin größer wird. Aus der Zusammenschau mit den weiter unten abgehandelten Fig. 7, 8 ergibt sich dann, dass der Reibungsanteil in Richtung der Spanraumgeometrie ebenfalls stufenartig oder stetig ansteigt, und in der Folge die Späne entlang der Spannut 6 immer mehr beschleunigt. Dies zieht die Späne auseinander und vermeidet so ein verstopfen der Spanräume und Spannuten. Außerdem ist in Fig. 2 erkennbar, dass die Spannuten 6 einschließlich ihres in Fig. 6 gezeigten Querschnittes eine konstante geometrische Ausbildung entlang des Spannutverlaufes haben. Natürlich ist im Rahmen der Erfindung auch eine im Verlauf variierende Spanraum- bzw. Spannut-Geometrie möglich. Beispielsweise kann die Querschnittsfläche der Spannuten 6 über die gesamte Länge des Werkzeugs insbesondere in der Breite anwachsen. Dadurch wird der Kerndurchmesser d (Fig. 6) nicht weiter beeinträchtigt. Die Späne erhalten aber vom Eingang der Spannut 6 an der Schneide 4 bis zum Auswurf der Späne am Bauteil immer mehr Raum, um sich auszubreiten zu können. Eine vorteilhafte Kombination ist beispielsweise ein zum Spannschaft 10 hin ansteigender Nutwinkel γ₂ mit einem in der gleichen Richtung immer breiter, aber flacher werdenden Querschnitt der Spannut 6. Zum einen wird erreicht, dass der Spannutquerschnitt erhalten bleibt, während die Späne durch den steigenden Nutwinkel γ₂ beschleunigt werden. Zum anderen ist es jedoch vorteilhaft, dass der Kerndurchmesser d (Fig. 6) ausgehend vom Zerspanungsteil 7 zum Spannschaft 10 hin größer wird. Bei seitlicher Krafteinwirkung am Zerspanungsteil 7 in Verbindung mit der Hebelwirkung steigt das wirkende Biegemoment vom Schneidenende zum Ende des Spannschaftes 10 hin stetig an. Es kann deshalb erreicht werden, dass am Schneidenteil tiefere Spanräume möglich sind als am Schaftende, ohne dass dabei das Werkzeug bricht

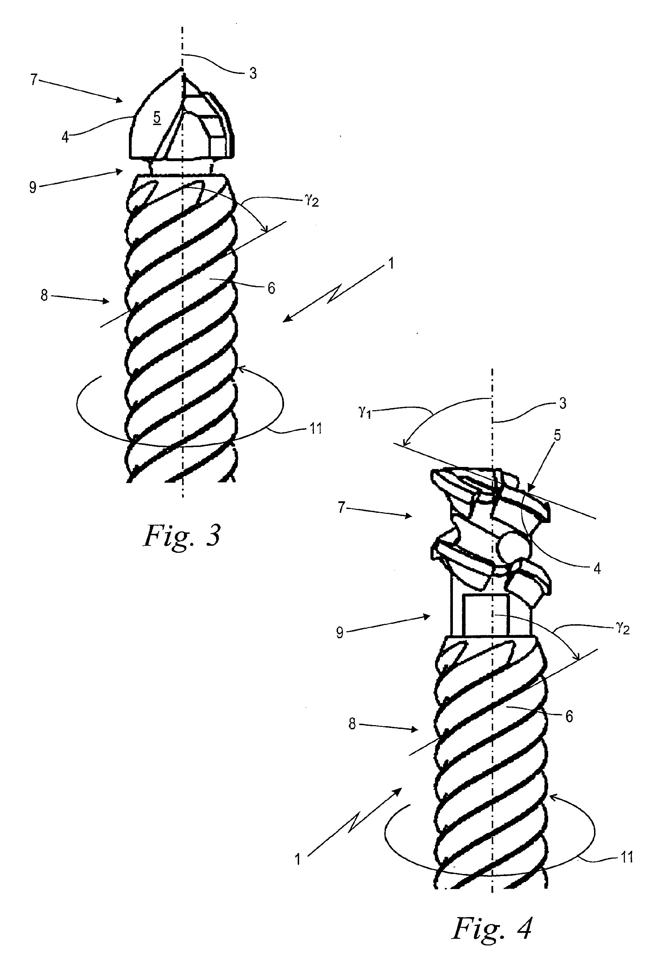

Fig. 3 zeigt in einer vergrößerten Detailansicht eine erfindungsgemäße Variante des Rotationswerkzeuges 1 nach Fig. 2, welches hier als Bohrer ausgeführt ist, und wobei die Schneiden 4 als Bohrschneiden ausgebildet sind. Die Spanflächen 5 liegen parallel zur Zeichnungsfläche und damit parallel zur Längsachse 3. Der hier nicht eingezeichnete, aber analog zu Fig. 2 ermittelte Spanwinkel γ₁ ist damit ± 0°, während die Spannuten 6 identisch zu Fig. 2 mit einem Nutwinkel γ₂ von etwa +70° ausgebildet sind. Damit ist hier analog zu Fig. 2, aber mit noch größerer Differenz erneut der Nutwinkel γ₂ größer ist als der Spanwinkel γ₁.

Der letztgenannte Zusammenhang wird noch extremer im Ausführungsbeispiel nach Fig. 4 deutlich. Dort ist in vergrößerter Detailansicht ein erfindungsgemäß ausgeführter Schaftfräser vergleichbar zum Ausführungsbeispiel nach Fig. 2 dargestellt. Wie auch im Ausführungsbeispiel nach Fig. 2 sind die Schneiden 4 als Umfangsfrässchneiden ausgebildet. Und auch hier sind die Spannuten 6 identisch zu Fig. 2 mit einem Nutwinkel γ₂ von etwa +70° ausgebildet. Im Unterschied zu Fig. 2 sind jedoch gemäß Fig. 4 die Spanflächen 5 bezogen auf die Längsachse 3 gegenläufig zur Spannut 6 geneigt. Gemäß obiger Vorzeichendefinition weist damit der Spanwinkel γ₁ ein negatives Vorzeichen auf und ist hier beispielhaft etwa -70°. Trotz des hier beispielhaft gleichen Betrages, und selbst bei einem größeren Betrag des Spanwinkels γ₁, aber wegen dessen negativen Vorzeichens gilt auch hier, dass der Nutwinkel γ₂ mit seinem definitionsgemäß positiven Vorzeichen größer ist als der Spanwinkel γ₁.

Fig. 5 zeigt in einer schematischen Querschnittsdarstellung das Rotationswerkzeug 1 nach dem Stand der Technik gemäß Fig. 1. Aus der Zusammenschau der Fig. 1 und 5 ergibt sich, dass in Umfangsrichtung eine gleiche Anzahl von Schneiden 4' und Spannuten 6' vorzufinden ist. Dies ergibt sich auch daraus, dass die vor den Spanflächen 5' liegenden Spanräume kontinuierlich in die Spannuten 6' übergehen. Im gezeigten Ausführungsbeispiel sind über den Umfang des Rotationswerkzeug 1 verteilt drei Schneiden 4' und drei zugeordnete Spannuten 6' vorgesehen. Im Bereich der Spannuten 3' hat das Rotationswerkzeug 1 einen Durchmesser D'. Aus dem Querschnitt und insbesondere aus der radialen Tiefe der Spannuten 6' ergibt sich jedoch ein radial innenseitig der Spannuten 6' liegender tragender Kern mit einem Kerndurchmesser d'. Der Kerndurchmesser d' ist maßgeblich für die Tragfähigkeit des Rotationswerkzeuges 1 insbesondere bei Biegebeanspruchung. Die Spannuten 6' müssen in der Summe eine bestimmte Querschnittsfläche aufweisen, um eine bestimmte Förderkapazität für Späne zu erreichen. Hieraus folgt, dass die Spannuttiefe ein d' limitiert ist.

Im Vergleich dazu ist in Fig. 6 eine schematische Querschnittsdarstellung des erfindungsgemäßen Rotationswerkzeuges 1 nach Fig. 2 im Bereich seiner Spannuten 6 dargestellt. Zunächst ist aus der Zusammenschau der Fig. 2 und 6 ersichtlich, dass die über den Umfang des Spanabfuhrteiles 8 verteilte Anzahl von Spannuten 6 größer ist als die über den Umfang des Zerspanungsteiles 7 verteilte Anzahl der Schneiden 4. Gemäß der Darstellung nach Fig. 2 sind über dem Umfang verteilt zwei Schneiden 4 vorgesehen, wobei jedoch auch eine abweichende Anzahl in Betracht kommt. Die über den Umfang des Spanabfuhrteiles 8 verteilte Anzahl von Spannuten 6 beträgt vorteilhaft mindestens drei und insbesondere vier bis acht. Gemäß der Darstellung nach Fig. 6 sind acht Spannuten 6 gleichmäßig über den Umfang verteilt. Der Querschnitt der einzelnen Spannuten 6 ist derart bemessen, dass die Summe aller Querschnittsflächen etwa gleich der Summe der Querschnittsflächen der Spannuten 6' gemäß Fig. 5 ist und dadurch mindestens die gleiche Förderkapazität für Späne erreichen kann. Aus dem direkten Vergleich zwischen den Fig. 5 und 6 ergibt sich jedoch, dass trotz gleicher Gesamtquerschnittsfläche und gleichem Durchmesser D die Querschnittsschwächung kleiner und damit der Kerndurchmesser d größer bei der erfindungsgemäßen Ausführungsform der Fig. 6 ist als beim Stand der Technik nach Fig. 5.

Die Fig. 7 und 8 zeigen noch in jeweils einer Schemadarstellung die auf punktförmig angedeutete Späne 16 beim Bohren bzw. beim Fräsen wirkenden, unterschiedlichen Kraftverhältnisse: Gemäß Fig. 7 wird das als Bohrer ausgeführte erfindungsgemäße Rotationswerkzeug 1 mit einem axialen Vorschub 13 in ein schematisch angedeutetes Werkstück 2 eingebohrt. Es entsteht eine Bohrung 12, deren Bohrungswände die Spannuten 6 allseitig umschließen. Der Transport der Späne 16 kann allein entlang der Spannuten 6 in der durch ihren Verlauf vorgegebenen Richtung erfolgen. Der Transport wird herbeigeführt durch Reibkräfte, die die Bohrungswand auf die mit dem Werkzeug mitdrehenden Späne 16 ausübt. Diese Reibkraft wirkt zunächst in Umfangsrichtung entgegen der Drehrichtung des Rotationswerkzeuges 1 und ist hier als Umfangskraft Fᵤ eingezeichnet. Zerlegt man nun diese Umfangskraft Fᵤ vektoriell als Tangentialkraft in die Längsrichtung der Spannut und als Normalkraft Fₙ in eine Richtung senkrecht zur Spannutwand, so erkennt man, dass der Span 16 mit dem größeren Teil der Kraft, nämlich mit der Tangentialkraft Ft in der Spannut 6 vorangeschoben wird. Nur ein kleiner Teil der Kraft, nämlich die Normalkraft Fₙ drückt gegen die Spannutwand. Es wird deutlich, dass mit größer werdendem Nutwinkel γ₂ auch die den Span 16 fortbewegende Tangentialkraft Ft in der Spannut 6 größer wird. Der erfindungsgemäß groß gewählte Nutwinkel γ₂ begünstigt damit die Spanabfuhr beim Bohren.

Die oben zum Bohren zusammengefassten Erkenntnisse sind jedoch nicht auf das Fräsen übertragbar. Abweichend vom Bohren nach Fig. 7 sind die Kraftverhältnisse beim Fräsen in Fig. 8 dargestellt: Auch hier ist das allerdings als Fräser ausgebildete Rotationswerkzeug 1 in das Werkstück 2 eingetaucht, übt aber einen lateralen, hier horizontalen Fräsvorschub 15 aus. Es entsteht eine gefräste Ausnehmung 14, die größer ist als das Werkzeug selbst. In Folge dessen fehlt es hier an einer vollständigen Umschlingung der Spannuten 6 mit dem Material des Werkstückes 2. Die Spannuten 6 sind über den größeren Teil ihres Umlaufes radial nach außen offen. Späne 16 befinden sich weniger in den Spannuten 6 als mehr verteilt in der gefrästen Ausnehmung 14. In den Spannuten 6 erfahren die Späne 16 keine nennenswerte Führung oder Reibung durch das Werkstück 2. Falls nun das Rotationswerkzeug 1 in Folge seines lateralen Vorschubes 15 auf einen in der Ausnehmung 14 befindlichen Span 16 trifft, wird dieser Span 16 normal bzw. senkrecht zur Wand der Spannut 6 mit einer Normalkraft Fₙ angestoßen. Zerlegt man diese Normalkraft Fₙ vektoriell in die Komponenten in Achsrichtung und senkrecht dazu, also in eine Axialkraft Fₐ, und in eine Umfangskraft Fᵤ, so sieht man zunächst, dass der Span 16 mit dem größeren Teil der Kraft, nämlich mit der Axialkraft Fₐ, aus der Ausnehmung 14 herausgehoben wird. Nur ein kleiner Teil der Kraft, nämlich die Umfangskraft Fᵤ drückt den Span 16 in unerwünschter Weise beiseite. Es wird deutlich, dass mit größer werdendem Nutwinkel γ₂ auch die den Span 16 heraushebende Axialkraft Fₐ größer wird, während gleichzeitig die unerwünschte Umfangskraft Fᵤ geringer wird. Trotz dieses vom Bohren völlig abweichenden Wirkmechanismus begünstigt erfindungsgemäß groß gewählte Nutwinkel γ₂ auch und gerade die Spanabfuhr beim Fräsen.

Sofern nicht ausdrücklich abweichend beschrieben oder dargestellt, stimmen die erfindungsgemäßen Ausführungsbeispiele nach den Fig. 2 bis 4 und 6 bis 8 in ihren übrigen Merkmalen, Bezugszeichen und Eigenschaften untereinander überein. Individuelle Merkmale eines der gezeigten Ausführungsbeispiele können auch mit einem der anderen Ausführungsbeispiele kombiniert werden.

## Patentansprüche

1. Rotationswerkzeug (1) zur spanabhebenden Bearbeitung von Werkstücken (2), welches sich entlang einer Längsachse (3) erstreckt, und welches mindestens eine Schneide (4) mit einer Spanfläche (5) und mindestens eine Spannut (6) umfasst, **dadurch gekennzeichnet, dass** das Rotationswerkzeug (1) in Richtung seiner Längsachse (3) in einen Zerspanungsteil (7) und in einen Spanabfuhrteil (8) aufgeteilt ist, wobei die mindestens eine Schneide (4) im Zerspanungsteil (7) angeordnet ist, wobei die Spannut (6) im Spanabfuhrteil (8) ausgebildet ist, wobei die Spanfläche (5) der Schneide (4) in einem Spanwinkel (γ₁) zur Längsachse (3) liegt, wobei die Spannut (6) in einem Nutwinkel (γ₂) zur Längsachse (3) verläuft, und wobei der Nutwinkel (γ₂) größer ist als der Spanwinkel (γ₁).

2. Werkzeug nach Anspruch 1,
**dadurch gekennzeichnet, dass** der Nutwinkel (γ₂) einen Betrag von ≥ +45° aufweist.

3. Werkzeug nach Anspruch 1 oder 2,
**dadurch gekennzeichnet, dass** die Spanfläche (5) bezogen auf die Längsachse (3) gleichsinnig zur Spannut (6) geneigt ist.

4. Werkzeug nach Anspruch 1 oder 2,
**dadurch gekennzeichnet, dass** die Spanfläche (5) bezogen auf die Längsachse (3) gegensinnig zur Spannut (6) geneigt ist.

5. Werkzeug nach einem der Ansprüche 1 bis 4,
**dadurch gekennzeichnet, dass** die über den Umfang des Spanabfuhrteiles (8) verteilte Anzahl von Spannuten (6) größer ist als die über den Umfang des Zerspanungsteiles (7) verteilte Anzahl der Schneiden (4).

6. Werkzeug nach einem der Ansprüche 1 bis 5,
**dadurch gekennzeichnet, dass** im Spanabfuhrteil (8) mindestens drei und insbesondere vier bis acht Spannuten (6) über den Umfang verteilt angeordnet sind.

7. Werkzeug nach einem der Ansprüche 1 bis 6,
**dadurch gekennzeichnet, dass** zwischen dem Zerspanungsteil (7) und dem Spanabfuhrteil (8) ein Übergangsteil (9) ohne Spannut angeordnet ist.

8. Werkzeug nach einem der Ansprüche 1 bis 7,
**dadurch gekennzeichnet, dass** die mindestens eine Schneide (4) als Umfangsfrässchneide ausgebildet ist.
